# EUROPEAN PATENT SPECIFICATION

(11) **EP 3 200 907 B1**
(45) Date of publication and mention of the grant of the patent: **16.05.2018**
(21) Application number: 15750726.0
(22) Date of filing: 13.08.2015
(51) Int. Cl.: B01J 2/04, B01J 2/18

(54) **APPARATUS AND METHOD FOR PRILLING A LIQUID, PREFERABLY UREA MELT**
VORRICHTUNG UND VERFAHREN ZUM PRILLEN EINER FLÜSSIGKEIT, VORZUGSWEISE HARNSTOFFSCHMELZE
APPAREIL ET PROCÉDÉ POUR ÉJECTER UN LIQUIDE, DE PRÉFÉRENCE D'URÉE FONDUE

(30) Priority: 29.09.2014 EP 14186852
(43) Date of publication of application: 09.08.2017
(73) Proprietor: Casale SA, 6900 Lugano (CH)
(72) Inventor: RIZZI, Enrico, I-22070 Casnate con Bernate (CO) (IT); BEDETTI, Gianfranco, CH-6900 Lugano (CH)
(74) Representative: Zardi, Marco
(86) International application number: PCT/EP2015/068628
(87) International publication number: WO 2016/050405

(56) References cited:
- EP-A1- 1 279 450
- EP-A1- 2 184 101

## Description

### Field of application

The invention relates to an apparatus for prilling a liquid, preferably for urea. In particular the invention relates to a prilling apparatus which can be applied both to shower-head type prilling towers and to rotating-bucket prilling towers.

### Prior Art

Prilling apparatuses constitute a known technology for converting a liquid product into solid form, consisting of grains of a desired size.

Prilling technology is for example widely used for the production of urea. A plant for the production of commercial solid urea comprises a synthesis section which produces urea melt and a finishing section for converting the urea melt into a solid product. Said finishing section, in many plants, uses prilling technology. The known methods for urea synthesis and finishing are described in literature, for example in Ullmann's Encyclopedia of Industrial Chemistry, Wiley-VCH Verlag, vol. A27.

The prilling process essentially consists in the cooling and solidification of liquid droplets falling inside a tower, struck by a counterflow of cooling air. A prilling apparatus therefore comprises a tower of suitable dimensions and height (typically various tens of metres high) and at least one dispenser located at the top of the tower and designed to generate the stream of droplets. Said dispenser typically consists of a shower sprayer or a rotating bucket with a perforated wall (prilling bucket) which produces liquid jets by means of centrifugal force. The resulting liquid droplets are cooled and solidify into spherical particles (prills) as they fall freely inside the tower, in counterflow to the forced or natural rising airflow.

It is desirable to obtain solid prills with uniform shape and size, because a product with these characteristics has a higher commercial value, and in order to improve the yield, reduce the harmful emissions from the prilling tower and increase the efficiency of the production process. Consequently, the device located at the top of the tower must be able to produce a stream of droplets with a high degree of monodispersion, i.e. a stream in which the divergence of shape and size is as low as possible.

Therefore, in the prior art, different technologies have been proposed in an attempt to improve the degree of monodispersion and in particular to obtain a uniform fragmentation of the liquid jets from the shower-head systems or rotating-bucket systems.

It is known, in this regard, that the degree of monodispersion is improved by imparting vibrations directly to the liquid jets or to the prilling device. Consequently, this phenomenon has been investigated by attempting to implement systems suitable for transmitting vibration pulses to the liquid jets.

A theoretical description of the laws governing the formation of droplets in a liquid jet subjected to vibrations is provided in EP 0822003.

An example of application of this technology to the shower-head system is described in US 3274642, where continuous jets of ammonium nitrate emitted from shower sprayers are converted into droplets by using sound waves. This solution, however, has not proved to be entirely satisfactory.

In the rotating-bucket systems two methods have been proposed: a first method envisages imparting vibrations directly to the liquid mass contained inside the bucket for example by means of a source similar to a tuning fork; according to a second method, instead, it is envisaged vibrating mechanically said bucket or a part thereof, in particular the perforated wall, as taught for example in EP 2070589. Both these solutions, however, have a number of drawbacks and disadvantages which are yet to be overcome. Document EP 1 279 450 discloses an apparatus for prilling a liquid (Q) comprising a distributor supplying said liquid, at least one dispenser and a pulse generator, wherein said pulse generator:is situated in said dispenser, is passed through by at least a portion (Q1) of said liquid, and comprises a surface. Imparting vibrations directly to the fluid mass is theoretically advantageous and simple from a constructional point of view, but it has been found that this process is difficult to control and very sensitive to external disturbances. For example, reflection or refraction of the waves may alter the frequency of said waves and, consequently, the uniformity of fragmentation of the liquid; moreover, it has been noted that, downstream of the point where the vibrations are imparted, the fluid must maintain a laminar flow, so that the vibrations reach unchanged the holes of the walls of the bucket. Therefore any divergence from the laminar flow condition may disturb the vibrations transmitted to the liquid jets and adversely affect the operation.

The method of vibrating the bucket, or its perforated wall, solves at least partly these problems because, downstream of the perforated wall, there are no disturbance sources; however, this gives rise to a number of constructional problems including the greater complexity and cost of the rotating bucket and the drawbacks associated with the use of mechanical vibrators, such as pneumatic turbines, which are greatly stressed. These drawbacks relate to the reliability, the uniformity of the frequencies generated, maximum frequency values which can be reached due to the type of vibrator used, and high stresses due to the vibrating masses. For these reasons it is difficult to obtain vibrational frequencies higher than 200-300 Hz. To summarize, in the first case there is a process which is more difficult to control, while in the second case there exist greater problems of a constructional nature or as regards reliability.

### Summary of the invention

The invention aims to overcome the aforementioned problems and drawbacks of the prior art. In greater detail, the invention aims to provide an apparatus for prilling a liquid, which is applicable to both the shower-head and rotating-bucket type prilling plants and which is able, over the prior art, to achieve: a high degree of monodispersion of the liquid droplets and therefore of the granules produced, constructional simplicity and therefore low costs, greater capacity while achieving high performances in terms of product quality, and absence of mechanical vibrators with advantages in terms of cost and reliability.

The idea forming the basis of the invention is to induce the desired vibration of the liquid mass by means of a generator comprising at least two surfaces in a relative movement (for example rotation) and configured so as to transmit to the liquid periodic pressure pulses at a frequency determined by their relative speed.

These objects are achieved with an apparatus for prilling a liquid, comprising a distributor for supplying said liquid, at least one dispenser, and a pulse generator, wherein said pulse generator:
is situated in either one of said supply distributor and said dispenser,
is passed through by at least a portion of said liquid,
and comprises at least a first surface and a second surface, facing one another and performing a relative movement, and comprising respective passages for the liquid,
and wherein said first surface and second surface, which are passed through by the liquid, generate in the liquid periodic pulses of pressure having a predetermined frequency depending on the relative speed of said two surfaces.

In particular, said second surface preferably performs a relative rotational movement with respect to said first surface. In these embodiments, said pulse generator may also be called, more briefly, rotary valve.

Preferably, said pulse generator comprises a first body and a second body. These bodies define, respectively, said first surface and second surface. More preferably, said first body is formed by a casing and said second body is a rotor rotatable with respect to the casing.

The first body may be defined as being stationary and the second body may be defined as being movable. The term "stationary body", in the description and the claims, refers to the relative movement of the two surfaces which generates the pressure pulses; in rotating-bucket systems in which the pulse generator is mounted inside the bucket, said stationary body generally also rotates integrally with the bucket.

Said surfaces comprise suitable liquid passages, for example holes or in an equivalent manner eyelets or openings. Preferably, the two surfaces have the same number and arrangement of the liquid passages.

According to different embodiments, said surfaces may be, for example, flat, cylindrical or conical. Accordingly, the pulse generator may be defined as having flat, cylindrical or conical geometry.

In a pulse generator with cylindrical or conical geometry the stationary body is preferably a casing with an essentially cylindrical or frustoconical shape, and the rotating body is formed by a drum, also with a cylindrical or conical shape, arranged inside the casing.

In particular, said first and second surfaces form the side walls of said casing and said rotating drum, and perform a revolutionary motion around an axis parallel to (or coinciding with) the direction of the liquid flow supplied to said generator. Said surfaces are coaxial and passed through by the liquid, which emerges radially from the outer-lying cylindrical or conical surface. Consequently, such a generator is referred to as being of the radial flow or essentially radial type.

A pulse generator with flat geometry, instead, comprises flat surfaces, which are passed through by the liquid and which are substantially perpendicular to the direction of the flow of liquid supplied to said generator. For this reason, this generator is also referred to as being of the axial flow type since the liquid flow leaving the device is substantially axial.

In axial-flow embodiments, the stationary body and the rotating body are advantageously two coaxial discs.

Said generator, in the various embodiments described, is able to transfer pressure pulses to the liquid being crossed by, owing to transit of the liquid through the liquid passages of the two surfaces in relative movement. In fact, the movement of the two surfaces is such that a passage in one surface is alternately "closed" by the second surface or "open", i.e. faces a passage in the second surface, and this produces vibrations, whose frequency depends on the relative speed.

Said generator or valve may be positioned in the supply distributor or directly inside the dispenser.

A pulse generator with an axial through-flow is positioned advantageously inside the supply distributor. This arrangement is preferred in shower-head systems, in which the dispenser is formed by one or more shower sprayers.

A pulse generator with a radial flow, for example with the aforementioned cylindrical or conical geometry, may instead be positioned advantageously inside a prilling bucket. An advantage of this arrangement is the small distance between the pulse source and the perforated walls of the bucket.

Rotation of the rotating body of the pulse generator may be imparted by a suitable motor which advantageously has an adjustable number of rpm (for example an electric motor).

Alternatively, according to one of the aspects of the invention, rotation of the rotating body is imparted fluido-dynamically by making use of crossing of said liquid.

For example, in a first fluido-dynamically operated embodiment, an impeller is integral with the rotating body of the pulse generator and said impeller is made to rotate by the liquid, i.e. it works essentially as a turbine which drives the rotating body. Said turbine-impeller is advantageously of the axial flow or centrifugal radial flow type depending on whether the pulse generator itself is of the axial or radial flow type, as mentioned above.

In another fluido-dynamically operated embodiment, rotation of the movable rotating body is imparted by a suitable inclination of the liquid passages, which are directed so as to impart a change of direction to the flow and, consequently, to generate a rotational torque on the movable body. In other words, the stationary body and the rotating body of the pulse generator essentially act as turbine stages resulting in conversion of part of the energy of the fluid itself into mechanical energy for operation of the movable part.

For example, in a particularly preferred (axial flow) embodiment, the generator comprises a first disc and a second disc, both discs being perforated and coaxial, and the second disc rotating with respect to the first disc. The first disc comprises a first series of holes having a first angle of inclination with respect to the axis of the two discs; the second rotating disc comprises a second series of holes having a second angle of inclination with respect to said axis. Preferably, the second angle of inclination is equal and opposite to the first angle, imparting a substantially symmetrical deviation to the flow. For example, the two angles are equal to +45 degrees and -45 degrees such that the holes in the two discs impart a deviation of 90 degrees to the liquid flow. Preferably, said perforated discs have the same number and arrangement of holes. In the case of cylindrical or conical surfaces with inclined holes, the angle of inclination is defined with respect to the normal to the surface, along the axis of the hole.

The liquid flow through the pulse generator requires a certain pressure head, for example if urea melt is being processed said pressure head is for example in the region of 1 bar. Another aspect of the invention relates to the manner of providing the liquid with the necessary pressure head. For the same valve geometry, the greater is the pressure head in the vicinity of the valve the greater is the flowrate passing through it.

In a first embodiment, said pressure head is provided by a pump. The use of a pump is suitable in particular in embodiments with a fluido-dynamically operated pulse generator (for example of the turbine type or with inclined holes) since it is necessary to provide the fluid with the pressure head needed not only to pass through the generator, but also to operate the associated rotating body. In other words, it is necessary to consider both the head losses and the energy transferred from the liquid stream to said rotating body.

In a second embodiment said pressure head is provided by a pump-impeller which is integral with the movable body of the pulse generator. Said embodiment is applicable in the presence of a motor, for example an electric motor, which operates the pulse generator. In this case, the motor may be used to drive both the rotating body of the pulse generator and the pump-impeller which provides the liquid with the necessary pressure head.

One advantage of these embodiments is that they require only a single driving unit, i.e. a pump which supplies the liquid and which, by means of the turbine-impeller, also operates the movable body of the pulse generator, or a motor which drives the said movable body and which, by means of the pump-impeller, also maintains the desired liquid flow.

The frequency (measured in Hertz) imparted to the liquid flow depends on the speed of rotation of the pulse generator, therefore from the number of revolutions which it performs. Adjustment of the frequency is performed in the first case by regulating the delivery pressure of the pump and in the second case by regulating the number of revolutions of the motor.

In both cases, instead, the intensity of the pulses transmitted to the liquid jets depends on the configuration of the pulse generator, in particular of the stationary body and the rotating body.

In another embodiment, the pressure head is provided by a pump external to the pulse generator, and said generator is operated by a dedicated motor, advantageously an electric motor. This embodiment may have a greater cost, but has the advantage of allowing the independent adjustment of both the frequency and the intensity of the pulses, with advantages in terms of the operating flexibility.

Another aspect of the invention relates to the amount of liquid passing through the pulse generator compared to the total amount of flow. The amount of liquid supplied to the pulse generator may correspond to all the liquid or to part of it, according to different embodiments of the invention. In this second case, a part of the liquid bypasses the pulse generator. This bypass may be obtained for example by supplying the pulse generator via a dedicated channel, coaxial with the said distributor. In some embodiments the generator may be installed directly inside said supply channel.

In an axial-pulse generator, for example of the type with perforated discs, the amount of liquid which passes through the said generator is preferably not greater than 30% of the total, and preferably equal to about 10%. The Applicant has found that in this way there is a more regular flow at the outlet of the dispenser (rotating bucket or shower sprayer) and an optimum compromise is also achieved in terms of efficiency and small dimensions and limited cost of the pulse generator.

In order to supply the pulse generator with the entire flow, it is advantageous to use the radial flow geometry, i.e. with cylindrical or conical surfaces, which offers greater through-flow cross-sections than the axial-flow configurations.

The dispenser of the liquid droplets may consist of one or more shower sprayers or one or more rotating buckets.

In the shower-head systems, the prilling apparatus forming the subject of the invention comprises a supply tank upstream the shower sprayers, and the pulse generator is advantageously positioned inside said supply tank. In some embodiments, several pulse generators are installed, for example one per array of sprayers or one for each single sprayer. In the latter case it is preferable to increase the dimensions of the sprayers so as to reduce their number and simplify the plant.

In rotating-bucket systems, a prilling apparatus according to the invention comprises preferably a vertical distributor for supplying the liquid, which terminates in a rotating bucket. The pulse generator may be positioned inside the distributor or inside the bucket. In particular, an axial (disc-type) pulse generator is positioned preferably inside the supply distributor, while a cylindrical or frustoconical pulse generator is positioned more advantageously inside the rotating bucket. Preferably the diameter of the bucket is greater than the outer diameter of the pulse generator so as to leave a predefined distance between the outer surface of the generator (pulse source) and the walls of the bucket. Said distance is suitable for avoiding the reflected waves and for preventing the output turbulence from the pulse generator from reaching the perforated walls of the bucket.

The pulse generator is completely immersed in the fluid, both in the shower-head systems and in the rotating-bucket systems, and, inside the latter, it remains immersed even when the bucket is rotating. Immersion is ensured by a level sensor able to keep the liquid level within predetermined limits.

A particularly preferred application consists in urea prilling. In this case the liquid consists of urea melt with high purity, typically higher than 99% and for example 99.5% or 99.7%. The invention, however, may also be applied to the prilling of other substances.

The invention offers numerous advantages. The system is low-cost and reliable, thus overcoming the drawbacks of vibrating-bucket systems. The invention is applicable both to existing prilling towers and to newly constructed towers, both of the shower-head and rotating-bucket type. In fact, from the point of view of plant design, small modifications are required compared to the conventional systems, such that the invention is suitable for the modernization of existing plants. Another advantage relates to the high frequency which may be obtained. The rotary-valve pulse generator according to the invention may in fact reliably generate high-frequency pulses, for example 500 Hz or greater, which in vibrating-bucket systems cannot be reached or in any case subject the mechanical parts to high stresses, reducing the reliability greatly.

The advantages will emerge even more clearly with the aid of the detailed description below, relating to a number of preferred embodiments.

### Brief description of the figures

Fig. 1 is a schematic illustration of a rotating-bucket prilling apparatus with axial-pulse generator, according to an embodiment of the invention.
Fig. 2 shows a variant of the apparatus according to Fig. 1.
Fig. 3 shows a diagram of an axial pulse generator which can be used in the apparatuses according to Figs. 1 and 2 as well as in the apparatuses according to Figs. 10-12.
Fig. 4 shows a detail of an axial generator of the type shown in Fig. 3, according to another embodiment.
Fig. 5 shows a variant of the axial generator according to Fig. 3, with an external supply pump.
Fig. 6 shows a further variant of an axial generator with movable body operated fluido-dynamically.
Figs. 7 and 8 are schematic illustrations of two variants of a rotating-bucket prilling apparatuses with radial-pulse generator, according to different embodiments of the invention.
Fig. 9 is an illustration of a radial pulse generator which can be used in the prilling apparatuses according to Fig. 7 or Fig. 8.
Figs. 10-12 are schematic illustrations of shower-head prilling apparatuses according to different embodiments of the invention.

### Detailed description

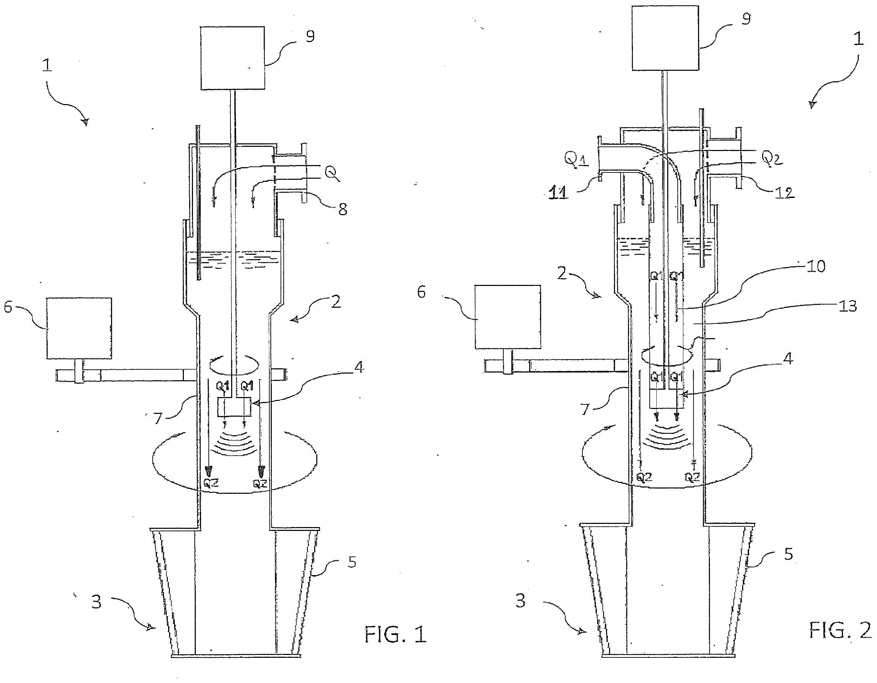

Fig. 1 is a schematic illustration of a prilling apparatus denoted generally by 1, intended for prilling a stream of urea melt Q. Said apparatus 1 is located at the top of a prilling tower (not shown).

Said prilling apparatus 1 comprises essentially a urea supply distributor 2, a dispenser formed by a rotating bucket 3 and a pulse generator 4 which in this example is housed inside the dispenser 2.

The bucket 3 has a perforated wall 5 and is made to rotate by a first motor 6; more particularly the motor 6 drives rotationally a tube 7 (which is part of the distributor 2) with which the bucket 3 or at least the perforated wall 5 is integral.

The urea melt Q is introduced into the distributor 2 via an inlet 8 and travels along the tube 7 until it reaches the bucket 3. As can be noted in the figure, the pulse generator 4 is passed through by the flow Q or by a part thereof. In the example shown in Fig. 1, said generator 4 has a smaller cross-section than the tube 7 and therefore is passed through by a portion Q1 of urea, the remaining portion Q2 passing into the space around the generator 4.

Said generator 4 transfers pressure pulses with a predetermined frequency to the liquid, in particular to the portion Q1 which passes through it,. In greater detail, said generator 4 comprises essentially a stationary body and a movable body moved by a second motor 9. Said stationary body and movable body comprise suitable liquid passages and the frequency of the pulses is determined substantially by the speed of the movable body. The motor 9 has a variable speed and preferably is an electric motor.

Fig. 2 shows a variant of Fig. 1 in which the portion Q1 of liquid is supplied to the said pulse generator 4 by means of a tube 10 coaxial with the tube 7. A bypass space 13 is defined between the tube 10 and the tube 7. The generator 4 in particular is housed at the end of or inside said tube 10. The two portions of urea Q1 and Q2 are supplied via two inlets 11, 12 communicating respectively with the said coaxial tube 10 and the annular portion 13 of bypass.

In this embodiment, the urea portion Q1 may have a pressure head different from that of the urea portion Q2, the former being conveyed separately inside the tube 10.

Moreover, the two portions Q1 and Q2 may have a different composition, for example owing to the varying addition of additives. For example, it is possible to improve the mechanical characteristics of the end product by adding additives, such as formaldehyde, or complex fertilizers by means of the addition of compounds, such as sulphates, nitrates or phosphates.

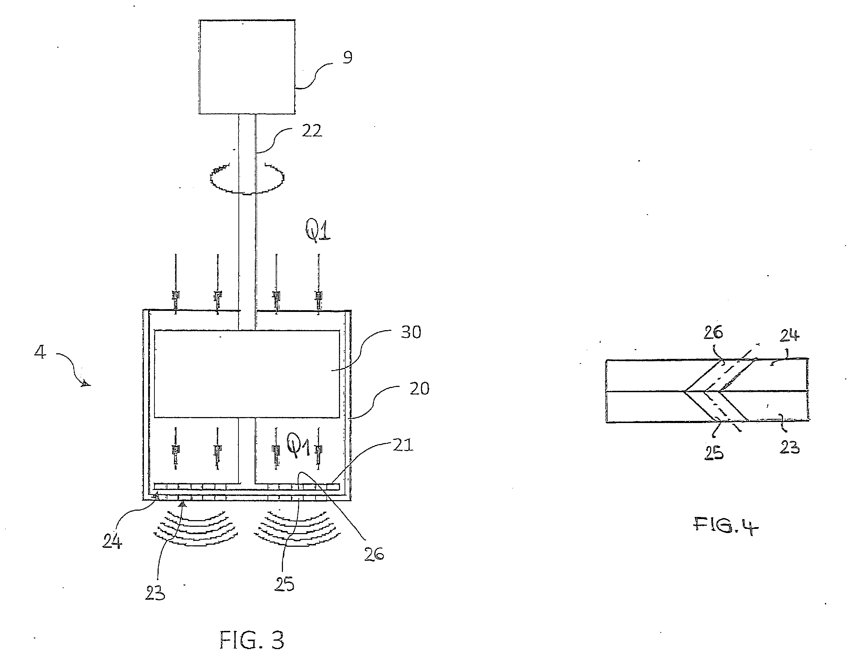

Further details of the pulse generator 4 are shown in Fig. 3. Said generator is essentially formed by a rotary valve comprising a casing (or stator) 20 and a rotor 21 operated by the motor 9 via a transmission shaft 22. Said stator 20 and said rotor 21 define, respectively, a first disc-like surface 23 and a second disc-like surface 24, which face each other and perform a relative movement as a result of the rotation. The surface 23 is formed by the bottom of the casing 20. Said disc-like surfaces 23 and 24 comprise respective passages for the liquid consisting of holes 25, 26. Advantageously, the holes 25, 26 have the same number and arrangement on the two surfaces 23, 24.

The liquid Q1, passing through the rotary valve or generator 4, receives a series of pressure pulses as a result of transit through the holes 25 and 26 and as a result of rotation of the body 21.

Fig. 3 also shows a pump 30 which provides the flow Q1 with the necessary pressure (head) to pass through the valve 4. Said pump 30 is also driven by the motor 9 via the shaft 22.

Fig. 4 shows a variant in which the holes 25, 26 have an inclined axis with respect to the surfaces 23 and 24. In this way, the flow is deviated, producing a driving torque which actuates the rotor 21 fluido-dynamically.

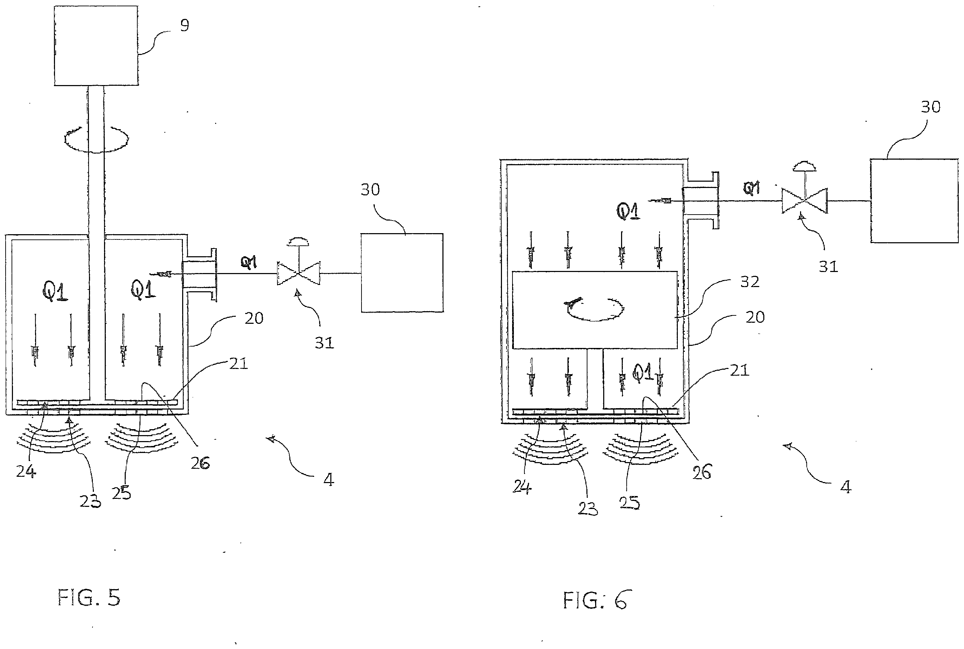

Fig. 5 shows a variant of Fig. 3 in which the pump 30 is not operated by the motor 9, but is independent. This embodiment is advantageous since the flowrate of the fluid Q1 is determined by said pump 30 and by a valve 31, independently from the speed of the motor 9 which solely drives the rotor 21 of the rotary valve 4. In other words, the frequency of the pulses transmitted to the liquid may be varied by regulating the speed of the motor 9, while the flowrate can be controlled independently by means of said pump 30 and valve 31.

Fig. 6 instead shows in schematic form another embodiment in which the rotor 21 is operated fluido-dynamically, using the energy of the liquid stream Q1. In greater detail, the rotor 21 is driven by a driving impeller 32 which is crossed by the flow Q1 and operates substantially in the manner of a turbine. In this embodiment, the frequency of the pulses is also determined by the flow Q1 and therefore ultimately by the pump 30.

Owing to the presence of said external pump 30, the body 20 of the valve 4 is under pressure. In the rotating-bucket systems, such as those shown in Figs. 1-2 or 7-8, said body rotates 20 at the same speed as the bucket 3 and therefore it is required to have a seal, for example a lip seal, on the rotating shaft integral with said pump (not shown in figure).

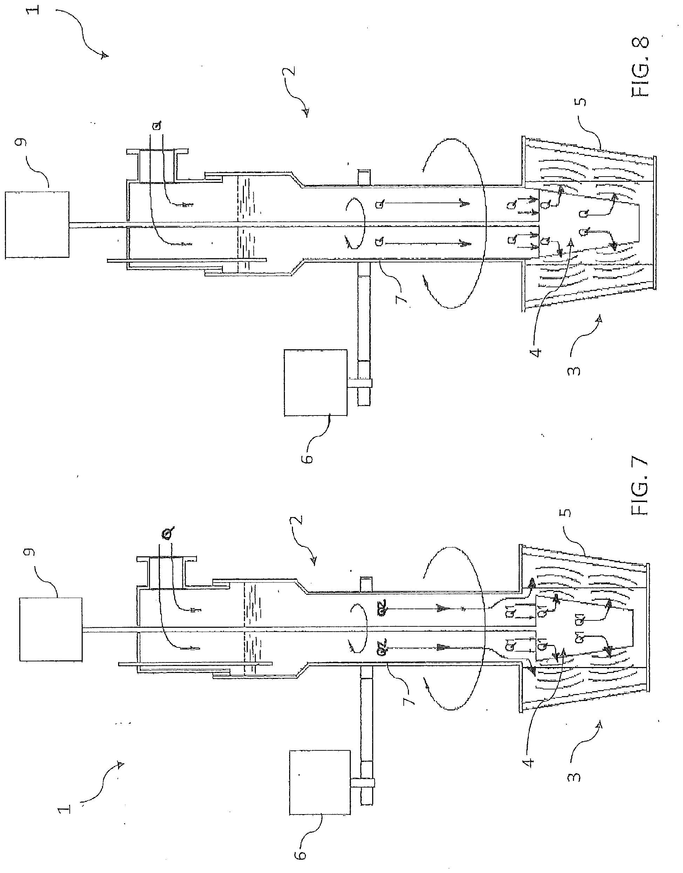

Figs. 7 and 8 show an embodiment comprising a rotary valve with conical geometry, which is inserted inside the bucket 3. The details corresponding to those of Fig. 1 are indicated by the same reference numbers for the sake of simplicity. In Fig. 7, the valve 4 is positioned so as to leave a bypass space for a portion Q2 of the liquid; the valve 4 is passed through by the remaining portion Q1. In Fig. 8 instead the valve 4 has dimensions such as to process the whole flow Q.

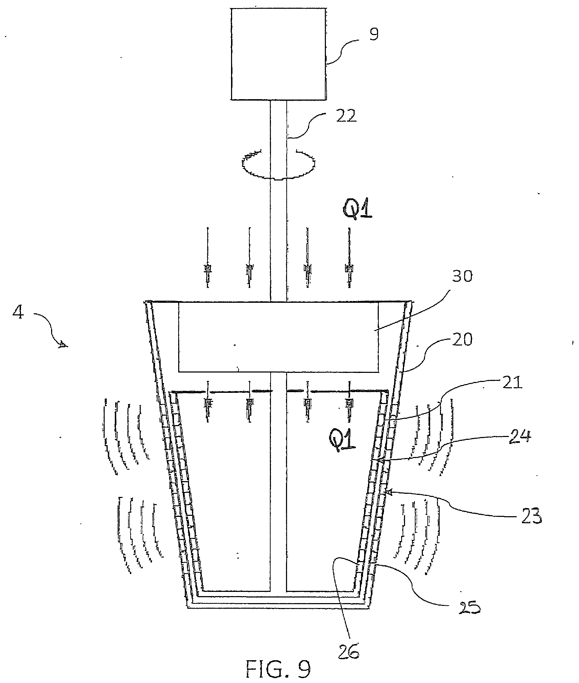

A preferred embodiment of the conical valve is schematically shown in Fig. 9. The casing 20 and the rotor 21 in this embodiment are bodies with a substantially frustoconical shape.

It can be noted by comparing Fig. 3 and Fig. 9 that the valve in Fig. 3 may be defined as being of the axial-flow type, since the flow emerging from the passages 25 and 26 has a direction aligned with the axis of rotation and parallel to the direction of the incoming flow Q1. The valve shown in Fig. 9 may be defined instead as being of the type with a radial or substantially radial flow.

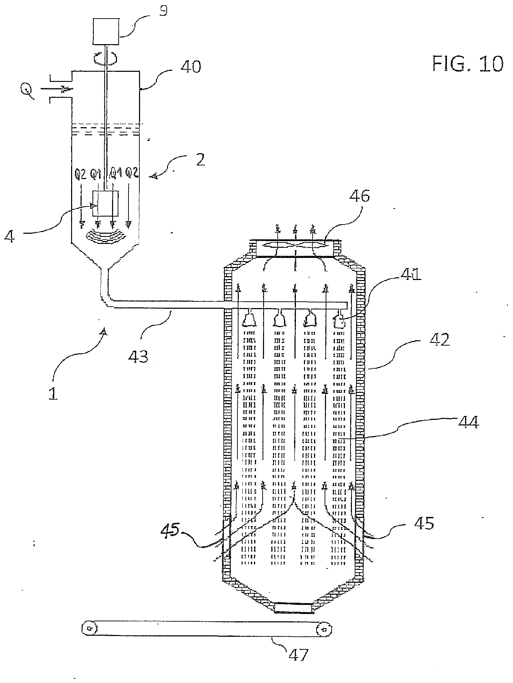

Fig. 10 shows a preferred example of a prilling system according to the invention with shower-head dispensers.

The supply distributor 2 is formed by a tank 40, inside which a rotary valve 4, preferably of the axial type shown in Fig. 3, is housed. Said tank 40 supplies a series of shower sprayers 41 at the top of a prilling tower 42, via a pipe line 43. The droplets 44 produced by the sprayers solidify, falling under gravity inside the tower 42, in a counterflow to air entering via bottom inlets 45 and exiting a top outlet 46. The solid prills are collected at the base of the tower by means of a conveyor 47.

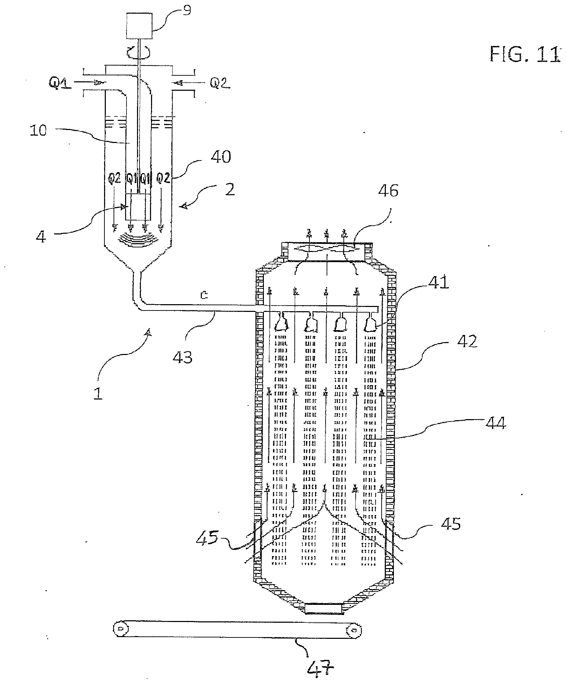

Fig. 11 shows a variant similar to that of Fig. 2, with a coaxial tube 10 supplying the rotary valve.

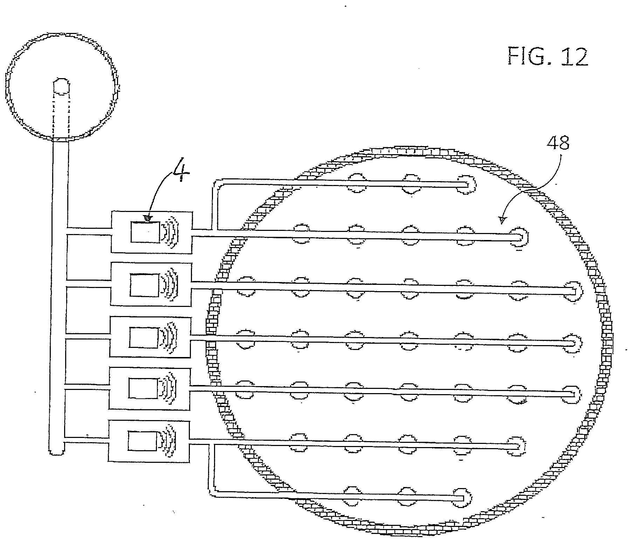

Fig. 12 shows schematically an embodiment of a shower-head system comprising a plurality of pulse generators (rotary valves) 4, in the case in question each generator 4 serving a respective set of 48 shower sprayers.

In the various embodiments of the invention, the rotary valve 4 generates pressure pulses in the fluid passing through it. Said pressure pulses result in improved fragmentation of the liquid jets emitted from the perforated wall 5 of the bucket 3 (Figs. 1 to 9) or the sprayers 41 (Figs. 10 to 12), improving the monodispersion of the droplets and consequently the quality of the solid prills (uniformity of shape and size).

## Claims

1. Apparatus (1) for prilling a liquid (Q), preferably urea melt, comprising a distributor (2) supplying said liquid, at least one dispenser (3, 41) and a pulse generator (4), wherein said pulse generator (4):
is situated in either one of said supply distributor (2) and said dispenser (3, 41),
is passed through by at least a portion (Q1) of said liquid,
and comprises at least a first surface (23) and a second surface (24), facing one another and performing a relative movement and comprising respective passages (25, 26) for the liquid,
and wherein said first surface (23) and second surface (24), which are passed through by the liquid (Q, Q1), generate in the liquid periodic pulses of pressure having a predetermined frequency depending on the relative speed of said two surfaces (23, 24).

2. Apparatus according to claim 1, wherein said two surfaces (23, 24) perform a relative movement of rotation.

3. Apparatus according to claim 1 or 2, wherein said pulse generator (4) comprises a stationary body (20) and a rotating body (21), said first surface (23) being part of said stationary body, and said second surface (24) being part of said rotating body.

4. Apparatus according to any one of the preceding claims, wherein said first surface (23) and said second surface (24) are cylindrical or conical, and the passage of the liquid (Q, Q1) through said surfaces occurs in a substantially radial direction.

5. Apparatus according to claims 3 and 4, wherein said stationary body (20) has a cylindrical or conical shape and said rotating body (21) is a drum also having a cylindrical or conical shape respectively, and rotates inside said drum, said first surface (23) and second surface (24) passed through by the liquid (Q, Q1) being the side surfaces of said stationary body (2) and of said rotating drum (21).

6. Apparatus according to claim 5, wherein said dispenser (3) comprises at least one rotating prilling bucket and said pulse generator (4) is positioned inside said bucket (3).

7. Apparatus according to any one of claims 1 to 3, wherein said first surface (23) and said second surface (24) are substantially flat and the passage of the liquid (Q, Q1) through said surfaces occurs in an axial direction perpendicular to said surfaces.

8. Apparatus according to claim 7, wherein said stationary body (20) and said rotating body (21) are formed respectively by a first perforated disc (23) and by a second perforated disc (24), the axes of the first and second disc being parallel to each other.

9. Apparatus according to claim 8, wherein said pulse generator (4) is positioned inside said supply distributor (2).

10. Apparatus according to any one of claims 3 to 9, wherein rotation of the rotating body (21) is imparted fluido-dynamically by the liquid (Q, Q1) passing through the pulse generator (4).

11. Apparatus according to claim 10, comprising a driving impeller (32) integral with said rotating body and wherein said impeller is made to rotate by the liquid (Q, Q1) passing through the pulse generator.

12. Apparatus according to claim 10, wherein said first surface (23) and said second surface (24) have liquid passages with a different angle of inclination relative to the surface, such that the flow through said liquid passages is subjected to a deviation resulting in a driving torque transmitted to the rotating body (21).

13. Apparatus according to claim 12, wherein the stationary body (20) and the rotating body (21) are formed by a first (23) and by a second disc (24), the first disc has holes (25) with a first angle of inclination and the second disc has holes (26) with a second angle of inclination opposite to the first angle, and preferably said first angle is equal to +45° and said second angle is equal to -45°.

14. Apparatus according to any one of the preceding claims, wherein said surfaces (23, 24) have the same number and the same pattern of liquid passages.

15. Apparatus according to any one of the preceding claims, comprising a pump (30) which processes said at least one liquid portion (Q, Q1) so as to allow said at least one liquid portion (Q, Q1) to pass through said pulse generator (4).

16. Apparatus according to claim 15, comprising a pump impeller (30) Integral with the rotating body of the pulse generator (4), wherein said pump impeller processes said at least one liquid portion (Q, Q1) so as to allow said at least one liquid portion (Q, Q1) to pass through said pulse generator (4).

17. Apparatus according to any one of the preceding claims, wherein said at least one dispenser: is a rotating bucket (3) with a perforated wall (5); or comprises one or more shower sprayers (41).

18. Apparatus according to Claim 17, wherein the dispenser is a rotating bucket (3), the apparatus comprising a first motor (9) which operates said movable body (21) of the pulse generator (4), and a second motor (6) which operates said rotating bucket (3).

19. Apparatus according to any one of the preceding claims, wherein said distributor (2) comprises a substantially cylindrical pipe (7); said pulse generator (4) is situated inside said pipe (7) and has a cross-section smaller than the cross-section of said pipe (7), thus leaving a bypass space (13) around the pulse generator (4), so that a first portion (Q1) of a flow (Q) entering the distributor (2) passes through said pulse generator (4), while a remaining portion (Q2) bypasses said pulse generator (4).

20. Apparatus according to claim 19, wherein the pulse generator (4) is housed inside a coaxial tube (10) inside said pipe (7), and said coaxial tube (10) is supplied with said first portion of the liquid flow (Q1).

21. Method for prilling a liquid (Q), preferably urea, wherein at least a portion (Q1) of said liquid passes through the passages (25, 26) of a first surface (23) and a second surface (24) of a pulse generator (4), said two surfaces (23, 24) facing one another and performing a relative movement and generating in the liquid periodic pulses of pressure having a predetermined frequency dependent on the relative speed of said two surfaces (23, 24), wherein said pulse generator (4) is situated in a supply distributor (2) or in a dispenser (3, 41) of a prilling apparatus.

## Patentansprüche

1. Vorrichtung (1) zum Prillen einer Flüssigkeit (Q), vorzugsweise Harnstoffschmelze, aufweisend einen besagte Flüssigkeit zuführenden Verteiler (2), mindestens einen Ausgeber (3, 41) und einen Pulsgenerator (4), wobei besagter Pulsgenerator (4):
in einem von Zuführverteiler (2) und Ausgeber (3, 41) untergebracht ist,
von mindestens einem Anteil (Q1) der besagten Flüssigkeit durchströmt wird,
und mindestens eine erste Oberfläche (23) und eine zweite Oberfläche (24) aufweist, die einander zugewandt sind und eine Relativbewegung ausführen und jeweilige Durchgänge (25, 26) für die Flüssigkeit aufweisen,
und wobei besagte erste Oberfläche (23) und zweite Oberfläche (24), die von der Flüssigkeit (Q, Q1) durchströmt werden, in der Flüssigkeit periodische Druckpulse mit einer vorbestimmten, von der Relativgeschwindigkeit der besagten zwei Oberflächen (23, 24) abhängigen Frequenz erzeugen.

2. Vorrichtung nach Anspruch 1, wobei besagte zwei Oberflächen (23, 24) eine relative Rotationsbewegung ausführen.

3. Vorrichtung nach Anspruch 1 oder 2, wobei besagter Pulsgenerator (4) einen stationären Körper (20) und einen rotierenden Körper (21) aufweist, wobei besagte erste Oberfläche (23) Teil des besagten stationären Körpers und besagte zweite Oberfläche (24) Teil des besagten rotierenden Körpers ist.

4. Vorrichtung nach einem der vorhergehenden Ansprüche, wobei besagte erste Oberfläche (23) und besagte zweite Oberfläche (24) zylindrisch oder konisch sind und der Durchtritt der Flüssigkeit (Q, Q1) durch besagte Oberflächen in einer im Wesentlichen radialen Richtung erfolgt.

5. Vorrichtung nach Ansprüchen 3 und 4, wobei besagter stationärer Körper (20) eine zylindrische oder konische Form hat und besagter rotierender Körper (21) eine entsprechend ebenfalls eine zylindrische oder konische Form aufweisende Trommel ist und innerhalb besagter Trommel rotiert, wobei besagte erste Oberfläche (23) und zweite Oberfläche (24), die von der Flüssigkeit (Q, Q1) durchströmt werden, die Seitenoberflächen des besagten stationären Körpers (2) und der besagten rotierenden Trommel (21) sind.

6. Vorrichtung nach Anspruch 5, wobei besagter Ausgeber (3) mindestens einen rotierenden Prill-Eimer aufweist und besagter Pulsgenerator (4) innerhalb besagten Eimers (3) positioniert ist.

7. Vorrichtung nach einem der Ansprüche 1 bis 3, wobei besagte erste Oberfläche (23) und besagte zweite Oberfläche (24) im Wesentlichen flach sind und der Durchtritt der Flüssigkeit (Q, Q1) durch besagte Oberflächen in einer axialen Richtung senkrecht zu besagten Oberflächen erfolgt.

8. Vorrichtung nach Anspruch 7, wobei besagter stationärer Körper (20) und besagter rotierender Körper (21) entsprechend durch eine erste perforierte Scheibe (23) und durch eine zweite perforierte Scheibe (24) gebildet sind, wobei die Achsen der ersten und zweiten Scheibe parallel zueinander sind.

9. Vorrichtung nach Anspruch 8, wobei besagter Pulsgenerator (4) innerhalb besagten Zuführverteilers (2) positioniert ist.

10. Vorrichtung nach einem der Ansprüche 3 bis 9, wobei die Rotation des rotierenden Körpers (21) fluid-dynamisch durch die durch den Pulsgenerator (4) hindurchströmende Flüssigkeit (Q, Q1) erzeugt wird.

11. Vorrichtung nach Anspruch 10, aufweisend ein antreibendes Laufrad (32), das einstückig mit besagtem rotierenden Körper gebildet ist, und wobei besagtes Laufrad durch die durch den Pulsgenerator hindurchströmende Flüssigkeit (Q, Q1) in Rotation versetzt wird.

12. Vorrichtung nach Anspruch 10, wobei besagte erste Oberfläche (23) und besagte zweite Oberfläche (24) Flüssigkeitsdurchgänge mit einem unterschiedlichen Neigungswinkel relativ zu der Oberfläche haben, so dass die Strömung durch besagte Flüssigkeitsdurchgänge einer Ablenkung unterworfen ist, die in einem zu dem rotierenden Körper (21) übertragenen Antriebsmoment resultiert.

13. Vorrichtung nach Anspruch 12, wobei der stationäre Körper (20) und der rotierende Körper (21) durch eine erste (23) und durch eine zweite Scheibe (24) gebildet sind, wobei die erste Scheibe Löcher (25) mit einem ersten Neigungswinkel hat und die zweite Scheibe Löcher (26) mit einem zweiten, zu dem ersten Winkel entgegengesetzten Neigungswinkel hat und wobei vorzugsweise besagter erster Winkel gleich +45° ist und besagter zweiter Winkel gleich -45° ist.

14. Vorrichtung nach einem der vorhergehenden Ansprüche, wobei besagte Oberflächen (23, 24) die gleiche Anzahl und das gleiche Muster von Flüssigkeitsdurchgängen haben.

15. Vorrichtung nach einem der vorhergehenden Ansprüche, aufweisend eine Pumpe (30), die besagten mindestens einen Flüssigkeitsanteil (Q, Q1) so verarbeitet, dass besagter mindestens eine Flüssigkeitsanteil (Q, Q1) durch besagten Pulsgenerator (4) hindurchströmen kann.

16. Vorrichtung nach Anspruch 15, aufweisend ein Pumpenlaufrad (30), das einstückig mit dem rotierenden Körper des Pulsgenerators (4) gebildet ist, wobei besagtes Pumpenlaufrad besagten mindestens einen Flüssigkeitsanteil (Q, Q1) so verarbeitet, dass besagter mindestens eine Flüssigkeitsanteil (Q, Q1) durch besagten Pulsgenerator (4) hindurchströmen kann.

17. Vorrichtung nach einem der vorhergehenden Ansprüche, wobei besagter mindestens ein Ausgeber: ein rotierender Eimer (3) mit einer perforierten Wand (5) ist; oder eine oder mehrere Dusch-Sprüher (41) aufweist.

18. Vorrichtung nach Anspruch 17, wobei der Ausgeber ein rotierender Eimer (3) ist, wobei die Vorrichtung einen ersten Motor (9), der besagten bewegbaren Körper (21) des Pulsgenerators (4) betätigt, und einen zweiten Motor (6), der besagten rotierenden Eimer (3) betätigt, aufweist.

19. Vorrichtung nach einem der vorhergehenden Ansprüche, wobei besagter Verteiler (2) ein im Wesentlichen zylindrisches Rohr (7) ausweist; besagter Pulsgenerator (4) innerhalb besagten Rohrs (7) untergebracht ist und einen Querschnitt hat, der kleiner ist als der Querschnitt des besagten Rohrs (7), demzufolge ein Umgehungsraum (13) um den Pulsgenerator (4) herum verbleibt, so dass ein erster Anteil (Q1) einer in den Verteiler (2) eintretenden Strömung (Q) durch besagten Pulsgenerator (4) strömt, während ein verbleibender Anteil (Q2) besagten Pulsgenerator (4) umgeht.

20. Vorrichtung nach Anspruch 19, wobei der Pulsgenerator (4) innerhalb einer koaxialen Röhre (10) innerhalb besagten Rohrs (7) untergebracht ist und wobei besagter koaxialen Röhre (10) besagter erster Anteil der Flüssigkeitsströmung (Q1) zugeführt wird.

21. Verfahren zum Prillen einer Flüssigkeit (Q), vorzugsweise Harnstoff, wobei mindestens ein Anteil (Q1) der besagten Flüssigkeit durch die Durchgänge (25, 26) einer ersten Oberfläche (23) und einer zweiten Oberfläche (24) eines Pulsgenerators (4) strömt, wobei besagte zwei Oberflächen (23, 24) einander zugewandt sind und eine Relativbewegung ausführen und in der Flüssigkeit periodische Druckpulse mit einer vorbestimmten, von der Relativgeschwindigkeit der besagten zwei Oberflächen (23, 24) abhängigen Frequenz erzeugen, wobei besagter Pulsgenerator (4) in einem Zuführverteiler (2) oder in einem Ausgeber (3, 41) einer Prill-Vorrichtung untergebracht ist.

## Revendications

1. Appareil (1) pour mettre un liquide (Q) sous forme de granulés, de préférence de l'urée fondue, comprenant un distributeur (2) alimentant ledit liquide, au moins un distributeur (3, 41) et un générateur d'impulsions (4), ledit générateur d'impulsions (4) :
est situé dans l'un ou l'autre dudit distributeur d'alimentation (2) et dudit distributeur (3, 41),
est traversé par au moins une partie (Q1) dudit liquide,
et comprend au moins une première surface (23) et une deuxième surface (24) se faisant face l'une l'autre et effectuant un mouvement relatif et comprenant des passages respectifs (25, 26) pour le liquide,
ladite première surface (23) et la deuxième surface (24), qui sont traversées par le liquide (Q, Q1), génèrent dans le liquide des impulsions périodiques de pression ayant une fréquence prédéterminée en fonction de la vitesse relative desdites deux surfaces (23, 24).

2. Appareil selon la revendication 1, dans lequel lesdites deux surfaces (23, 24) effectuent un mouvement relatif de rotation.

3. Appareil selon la revendication 1 ou la revendication 2, dans lequel ledit générateur d'impulsions (4) comprend un corps stationnaire (20) et un corps rotatif (21), ladite première surface (23) faisant partie dudit corps stationnaire, et ladite deuxième surface (24) faisant partie dudit corps rotatif.

4. Appareil selon l'une quelconque des revendications précédentes, dans lequel ladite première surface (23) et ladite deuxième surface (24) sont cylindriques ou coniques, et le passage du liquide (Q, Q1) à travers lesdites surfaces se produit dans une direction sensiblement radiale.

5. Appareil selon les revendications 3 et 4, dans lequel ledit corps stationnaire (20) a une forme cylindrique ou conique et ledit corps rotatif (21) est un tambour ayant également une forme cylindrique ou conique respectivement, et tourne à l'intérieur dudit tambour, lesdites première surface (23) et deuxième surface (24) traversées par le liquide (Q, Q1) étant les surfaces latérales dudit corps stationnaire (2) et dudit tambour rotatif (21).

6. Appareil selon la revendication 5, dans lequel ledit distributeur (3) comprend au moins un godet rotatif de formation de granulés et ledit générateur d'impulsions (4) est positionné à l'intérieur dudit godet (3).

7. Appareil selon l'une quelconque des revendications 1 à 3, dans lequel ladite première surface (23) et ladite deuxième surface (24) sont sensiblement planes et le passage du liquide (Q, Q1) à travers lesdites surfaces se produit dans une direction axiale perpendiculaire auxdites surfaces.

8. Appareil selon la revendication 7, dans lequel ledit corps stationnaire (20) et ledit corps rotatif (21) sont formés respectivement par un premier disque perforé (23) et par un deuxième disque perforé (24), les axes des premier et deuxième disques étant parallèles l'un à l'autre.

9. Appareil selon la revendication 8, dans lequel ledit générateur d'impulsions (4) est positionné à l'intérieur dudit distributeur d'alimentation (2).

10. Appareil selon l'une quelconque des revendications 3 à 9, dans lequel la rotation du corps rotatif (21) est rendue fluido-dynamique par le liquide (Q, Q1) traversant le générateur d'impulsions (4).

11. Appareil selon la revendication 10, comprenant une roue d'entraînement (32) solidaire dudit corps rotatif et dans lequel ladite roue est amenée à tourner par le liquide (Q, Q1) passant à travers le générateur d'impulsions.

12. Appareil selon la revendication 10, dans lequel ladite première surface (23) et ladite deuxième surface (24) ont des passages de liquide avec un angle d'inclinaison différent par rapport à la surface, de sorte que l'écoulement à travers lesdits passages de liquide est soumis à une déviation qui résulte en un couple d'entraînement transmis au corps rotatif (21).

13. Appareil selon la revendication 12, dans lequel le corps stationnaire (20) et le corps tournant (21) sont formés par un premier (23) et par un deuxième disque (24), le premier disque comportant des trous (25) avec un premier angle d'inclinaison et le deuxième disque comportant des trous (26) avec un deuxième angle d'inclinaison opposé au premier angle, et de préférence ledit premier angle est égal à + 45° et ledit deuxième angle est égal à -45°.

14. Appareil selon l'une quelconque des revendications précédentes, dans lequel lesdites surfaces (23, 24) ont le même nombre et la même répartition de passages de liquide.

15. Appareil selon l'une quelconque des revendications précédentes, comprenant une pompe (30) qui traite ladite au moins une partie de liquide (Q, Q1) de façon à permettre à ladite au moins une partie de liquide (Q, Q1) de traverser ledit générateur d'impulsions (4).

16. Appareil selon la revendication 15, comprenant une roue de pompe (30) formant corps avec le corps rotatif du générateur d'impulsions (4), ladite roue de pompe traitant ladite au moins une partie de liquide (Q, Q1) de manière à permettre ladite au moins une partie de liquide (Q, Q1) de passer au travers dudit générateur d'impulsions (4).

17. Appareil selon l'une quelconque des revendications précédentes, dans lequel ledit au moins un distributeur : est un godet rotatif (3) avec une paroi perforée (5) ; ou comprend un ou plusieurs pulvérisateurs de douche (41).

18. Appareil selon la revendication 17, dans lequel le distributeur est un godet rotatif (3), l'appareil comprenant un premier moteur (9) qui actionne ledit corps mobile (21) du générateur d'impulsions (4), et un deuxième moteur (6) qui actionne ledit godet rotatif (3).

19. Appareil selon l'une quelconque des revendications précédentes, dans lequel ledit distributeur (2) comprend un tuyau sensiblement cylindrique (7) ; ledit générateur d'impulsions (4) est situé à l'intérieur dudit tube (7) et a une section transversale inférieure à la section transversale dudit tube (7), laissant ainsi un espace de dérivation (13) autour du générateur d'impulsions (4), qu'une première partie (Q1) d'un flux (Q) entrant dans le distributeur (2) traverse ledit générateur d'impulsions (4), tandis qu'une partie restante (Q2) contourne ledit générateur d'impulsions (4)

20. Appareil selon la revendication 19, dans lequel le générateur d'impulsions (4) est logé à l'intérieur d'un tube coaxial (10) à l'intérieur dudit tube (7), et ledit tube coaxial (10) est alimenté avec ladite première partie du flux de liquide (Q1).

21. Procédé de mise d'un liquide (Q) sous forme de granulés, de préférence d'urée, dans lequel au moins une partie (Q1) dudit liquide traverse les passages (25, 26) d'une première surface (23) et d'une deuxième surface (24) d'un générateur d'impulsions (4), lesdites deux surfaces (23, 24) se faisant face l'une l'autre et effectuant un mouvement relatif et générant dans le liquide des impulsions périodiques de pression ayant une fréquence prédéterminée dépendante de la vitesse relative desdites deux surfaces (23, 24), le générateur d'impulsions (4) étant situé dans un distributeur d'alimentation (2) ou dans un distributeur (3, 41) d'un appareil de génération de granulés.
